# NEW EUROPEAN PATENT SPECIFICATION

(11) **EP 0 426 852 B2**
(45) Date of publication and mention of the opposition decision: **29.01.2003**
(45) Mention of the grant of the patent: 08.01.1997
(21) Application number: 89911884.8
(22) Date of filing: 31.10.1989
(51) Int. Cl.: C08K 5/51, C08K 5/16, C08L 23/00

(54) **USE OF A SEALED VESSEL FOR COLOURED FOOD**
VERWENDUNG VON VERSCHLOSSENEN BEHÄLTERN FÜR GEFÄRBTE NAHRUNGSMITTEL
UTILISATION DE RECIPIENTS SCELLES POUR ALIMENTS COLORES

(30) Priority: 31.05.1989 JP 13585889
(43) Date of publication of application: 15.05.1991
(73) Proprietor: MITSUBISHI CHEMICAL CORPORATION, Chiyoda-ku, Tokyo-to (JP)
(72) Inventor: KOSEGAKI, Kimiho, c/o Yokkaichi Research Center, Yokkaichi-shi, Mie 510 (JP); ONISHI, Akiyoshi, c/o Yokkaichi Research Center, Yokkaichi-shi, Mie 510 (JP); INOUE, Masaru, Yokkaichi Research Center, Yokkaichi-shi, Mie 510 (JP); MORI, Takashi, c/o Yokkaichi Research Center, Yokkaichi-shi, Mie 510 (JP); TACHI, Kazuhisa, c/o Yokkaichi Research Center, Yokkaichi-shi, Mie 510 (JP)
(74) Representative: Eddowes, Simon
(86) International application number: JP8901122
(87) International publication number: WO90015099

(56) References cited:
- EP-A- 0 290 391
- DE-A- 3 508 983
- FR-A- 2 512 453
- JP-A- 61 255 953
- JP-A- 62 273 239
- CHEMICAL ABSTRACTS, vol. 111, 1989, Columbus, OH (US); J. NAKAJIMA et al., p. 48, AN 58982y
- WPIL, Derwent Publications Ltd., London, GB; AN 89-088866

## Description

This invention relates to the use of a sealed vessel for storing colored food which undergoes discoloration with difficulty even when contacted with a colored food such as vegetables, fruits, etc.

Polyolefins are inexpensive and also have excellent molding characteristics, and hence have been widely used also as food vessels or implements.

However, molded products made of polyolefins will undergo discoloration through contact with colored foods, for example, vegetables such as spinach, white rape, etc. and fruits. For solving this, for example, in Japanese Provisional Patent Publications No. 125450/1978, No. 36150/1984 and No. 113632/1986, polypropylenes formulated with additives such as sulfur type stabilizers, phenol type stabilizers, paraoxybenzoic acid or higher fatty acid alcohols, etc. have been known, but the effect is not satisfactory and further improvement has been desired.

Generally speaking, concerning discoloration of the molded product with a colored food of fresh vegetables and fruits and processed products thereof, its cause may include coloration with the dye contained in them, coloration through rottening of vegetables, discoloration with the colorant for food, and further discoloration through mutual interaction between various additives and the dye, etc., but has not been clarified yet.

Also, polyolefin is generally susceptible to thermal oxidation deterioration due to its chemical structure, and cannot stand the heat during processing and use. For this reason, a product which can stand practical application can be obtained usually by formulation of an antioxidant for inhibition of thermal oxidation deterioration, but there ensues the problem that coloration from the colored food becomes more marked with the antioxidant. Further, inhibition of odor is another problem to be solved.

In published French patent application No.2 512 453 polyolefin compositions are disclosed which show improved resistance to yellowing on exposure to ionizing radiation. Such materials are said to be suitable for the manufacture of medical instruments, food packaging materials and containers which are sterilized by irradiation. The most preferred compositions are polyolefins containing between 0.05 and 0.3 parts by weight of a heterocyclic hindered amine and 0.01 to 0.04 parts by weight of a phenol type antioxidant, namely 1, 3, 5- tris (3-hydroxy-2, 6-dimethyl-4-alkylbenzyl) isocynaurate.

Chemical Abstracts, volume 111, 1989, Abstract No. 58982y discloses polypropylene compositions having good resistance to yellowing on gamma irradiation. These materials are also said to be useful in preparing radiation - sterilizable goods such as disposable syringes, surgical dressings, food packages, etc.

The present invention is the use of a sealed vessel composed of a polyolefin containing (A) 0.01 to 1 parts by weight of a hindered amine light stabilizer having a molecular weight of 500 or more and (B) 0.01 to 0.5 parts by weight of an aromatic phosphite and/or an aromatic phosphonite antioxidant, wherein the relative proportions by weight of additives (A) and (B) are based on 100 parts by weight of the polyolefin, and wherein the material from which the sealed vessel is composed contains no phenol type antioxidant, for storing coloured food so as to prevent discoloration of the vessel during storage of the food.

### (Best modes for practicing the invention).

The polyolefin to be used in the present invention may include homopolymers of α-olefin such as ethylene, propylene, 1-butene, 1-pentene, 1-hexene, 4-methylpentene-1, etc., random copolymers, block polymers, alternate polymers, graft polymers, etc. mutually between α-olefins, or of these α-olefins with other copolymerizable monomers (vinyl ester such as vinyl acetate, etc., unsaturated organic acids or esters thereof such as acrylic acid, maleic anhydride, ethyl acrylate.).

Specifically, there may be included low-density polyethylene, medium-density polyethylene, high-density polyethylene, linear low-density polyethylene, ultra-low-density polyethylene, propylene-ethylene random and block copolymers, propylene-1-butene copolymer, propylene-ethylene-1-butene copolymer, poly4-methylpentene-1.

Preferred polyolefins as a sealed food vessel may include ethylene polymers such as low-density polyethylene, medium-density polyethylene, high-density polyethylene, linear low-density polyethylene, etc., propylene homopolymer, propylene-ethylene random or block copolymer, propylene-1 -butene copolymer, propylene-ethylene-1-butene copolymer, but among them most preferred are propylene homopolymer and propylene-ethylene random and block copolymers.

Specific examples of the hindered amine type light stabilizer which is the component (A) to be used in the present invention may include:
(1) polycondensate of dimethyl succinate and 1-(2-hydroxyethyl)-4-hydroxy-2,2,6,6-tetramethylpiperidine,
(2) poly[[6-(1,1,3,3-tetramethylbutyl)imino-1,3,5-triazine-24-diyl][(2,2,6,6-tetramethyl-4-piperidyl)imino]hexamethylene[[2,2,6,6-tetramethyl-4-piperidyl)imino]],
(3) bis(1,2,2,6,6-pentamethyl-4-piperidyl)ester of 2-(3,5-di-t-butyl-4-hydroxybenzyl)-2-n-butylmalonic acid,
(4) tetrakis(2,2,6,6-tetramethyl-4-piperidyl)1,2,3,4-butane-tetracarboxylate,
(5) bis(2,2,6,6-tetramethyl-4-piperidyl)sebacate,
(6) polycondensate of N,N'-bis(2,2,6,6-tetramethyl-4-piperidyl)hexamethylenediamine and 1,2-dibromoethane,
(7) poly[2-N,N'-bis(2,2,6,6-tetramethyl-4-piperidyl)-hexamethylenediamine-4-(N-morpholino)symtriazine],
(8) 1,1'-(1,2-ethanediyl)-bis(3,3,5,5-tetramethylpiperazinone),
(9) tris(2,2,6,6-tetramethyl-4-piperidyl)-dodecyl-1,2,3,4-butanetetracarboxylate,
(10) tris(1,2,2,6,6-pentamethyl-4-piperidyl)-dodecyl-1,2,3,4-butanetetracarboxylate,
(11) bis(1,2,2,6,6-pentamethyl-4-piperidyl)sebacate.
Those with molecular weights of 500 or more are used for compatibility reasons and excellent effects. Among them, the most suitable compounds are (1), (2), (4) and (7) as mentioned above. The amount of the component (A) is 0.01 to 1 part by weight, preferably 0.02 to 0.5 part by weight, per 100 parts by weight of the polyolefin. With an amount less than this, heat resistance is not sufficient, while with an excessive amount, it is not only uneconomical, but there ensues undesirably the problem of discoloration and the problem of bleeding.

Specific examples of the antioxidant of the above component (B) to be used in the present invention may include:
(12) tris(mixed mono- and dinonylphenyl)phosphite,
(13) tris(2,4-di-t-butylphenyl)phosphite,
(14) 4,4'-butylidene bis(3-methyl-6-t-butylphenyl-di-tridecyl)-phosphite,
(15) 1,1,3-tris(2-methyl-4-di-tridecylphosphite-5-t-butylphenyl)butane,
(16) bis(24-di-t-butylphenyl)pentaerythritol-diphosphite,
(17) tetrakis(2,4-di-t-butylphenyl)-4,4'-biphenylenephosphonite,
(18) bis(2,6-di-t-butyl-4-methylphenyl)pentaerythritol-diphosphite,
(19) 2,2'-ethylidene bis(4,6-di-t-butylphenyl)fluorophosphite,
(20) methylene bis(4,6-di-t-butylphenyl)-2-ethylhexylphosphite.

Among them, preferred are compounds of (13), (17), (18), (19) and (20), and most preferred are (13) and (17). The amount of the component (B) formulated is 0.01 to 0.5 part by weight, preferably 0.02 to 0.3 part by weight, per 100 parts by weight of the polyolefin. With an amount less than this, stability during molding and the inhibition effect of odor become insufficient, having also delicate influence on the mechanical characteristics of the molded product, while with an excessive amount, it is not only uneconomical, but also there ensues the problem of discoloration.

In the present invention, in addition to these essential components, other additive components can be formulated within the range which does not remarkably damage the effect of the invention. Particularly, formulation of an organic nucleating agent is preferred for enhancing remarkably transparency and rigidity. Examples of such organic nucleating agent may include:
(21) 1,3,2,4-di-benzylidene-sorbitol,
(22) 1,3,2,4-bis(p-methyl-benzylidene) sorbitol,
(23) 1,3,2,4-bis(p-ethyl-benzylidene)sorbitol,
(24) 1,3,2,4-bis(2',4'-di-methyl-benzylidene)sorbitol,
(25) 1,3-(p-chloro-benzylidene)-2,4-(p-methyl-benzylidene)sorbitol,
(26) 1,3,2,4-di(p-propyl-benzylidene)sorbitol,
(27) 1,3-benzylidene-2,4-(p-methylbenzylidene)sorbitol,
(28) 1,3-benzylidene-2,4-(p-ethylbenzylidend)sorbitol,
(29) 1,3-(P-methylbenzylidene)-2,4-(O-methylbenzylidene)sorbitol,
(30) 1,3-(O-methylbenzylidene)-2,4-(P-methylbenzylidene)-sorbitol,
(31) aluminum-mono-hydroxy-bis(p-t-butylbenzoate),
(32) sodium bis(4-t-butylphenyl)phosphate,
(33) sodium 2,2'-methylene-bis(4,6-di-t-butyl-phenyl)phosphate,
(34) sodium benzoate.

Among them, preferred are (21), (22), (23), (25), (31) and (33). Most preferred are (21), (22), (23), (25) and (33). The amount of the above organic nucleating agent added is 0.01 to 1 part by weight, preferably 0.03 to 0.5 part by weight, per 100 parts by weight of the polyolefin. With an amount less than this, the effect is inferior. On the other hand, with an excessive amount, it is not only uneconomical, but there will ensue undesirably such problems as bleeding, odor.

As other additional components, there may be included lubricants such as fatty acid amides, silicon oils, antistatic agents such as glycerine esters of fatty acids, amine type or amide type, inorganic fillers such as talc, barium sulfate, molecular weight controllers such as peroxides, chemical blowing agents, organic or inorganic pigments, fluorescent whitening agents, UV absorbers, antioxidants other than the phenol type, antifungus agents of the organic type or the inorganic type such as silver ions, copper ions, neutralization agents, acidity controllers, etc.

The composition comprising these components to be used in the present invention can be prepared according to conventional methods. For example, the above components (A), (B), the organic nucleating agent and other components, if necessary, are added to the powder of a polyolefin, and the mixture is stirred and mixed by a Henschel mixer, followed by extrusion by melting and kneading through an extruder into pellets. Then, the pellets are generally processed into a desired vessel by means of a molding machine such as injection molding, compression molding, sheet molding, film molding, blow molding, vacuum molding, etc. Alternatively, it is also possible to use a method in which a masterbatch containing highly concentrated additive components is prepared, and this is added during molding processing. Preferably, sealed vessels prepared according to injection molding are preferred with respect to appearance and uniformity of thickness.

The colored food as mentioned in the present invention refers to foods having dyes, including vegetables, fruits, see weeds such as spinach, white rape, cabbage, carrot, salted plum, Japanese radish, *Chrysanthemum coronarium,* strawberry, sea tangle, and processed foods of these. The sealed vessel refers to those to be used for conveying, storing, cooking of colored food.

### (Examples)

### Examples 1 - 9, Comparative examples 1 - 7

The components shown below were formulated in the amounts shown in Table 1 (% by weight) per 100 parts by weight of a propylene-ethylene random copolymer (MFR = 10 g/10 min, ethylene content = 3 % by weight), blended by a Henschel mixer, and then kneaded by a 30 mmφ extruder (240 °C). The pellets obtained were subjected to an injection molding machine (260 °C) to mold an injected vessel with a 2 mm thickness x 7 cm (longitudinal) x 11 cm (lateral) x 4.5 cm (height). Into the vessel, white rape juice subjected to a mixer was charged and stored at 30 °C for 5 days. Then, the contents were taken out, washed with water and the discoloration degree of the vessel was judged by observation with eyes.

The judgement standards are as follows:
- ⓞ: substantially no change recognized
- ○⁺:: only slight change recognized
- ○ :: slightly discolored
- Δ :: clear discoloration
- × :: considerably strongly discolored.

Transparency was measured by a haze meter (JIS K-6714). For Olsen flexural stiffness and Charpy impact strength, respective test strips were punched out from the vessel, and Olsen flexural stiffness was measured according to ASTM D747, and Charpy impact strength according to JIS K-7111. Also, a test strip of 65 mm x 35 mm was cut out and placed in a gear oven of 120 °C for measurement of embrittlement time.

Also, the vessel was sealed with attachment of a lid, heated in an oven at 80 °C for one hour, and then the lid was opened for evaluation of odor with nose. The evaluation standards are as shown below.
- ⓞ: substantially no smell
- ○⁺ :: slight smell
- ○ :: smell without attracting attention
- Δ :: considerable smell
- × :: excessive smell

Component (A) (hindered amine type light stabilizer):
Compound of the above (1)
Compound of the above (2)
Compound of the above (4)

Component (B) (aromatic phosphite type, aromatic phosphonite type antioxidant):
Compound of the above (13)
Compound of the above (17)

Organic nucleating agent:
Compound of the above (21)
Compound of the above (22)
Compound of the above (23)

Other additives:

| | |
|---|---|
| CAST | calcium stearate |
| DMTP | dimyristyl thiodipropionate |
| IR1010 | tetrakis[methylenebis-3-(3',5'-di-t-butyl-4'-hydroxyphenyl)propionate]methane |
| TPNC | 1,1,3-tris(2-methyl-4-hydroxy-5-t-butylphenyl)-butane |
| TS5 | glyceryl monostearate |
| AMS | N,N-bis(2-hydroxyethyl) stearylamine |
| OA | oleic acid amide |
| POAB | butyl paraoxybenzoate |
| STOH | stearyl alcohol |

### Examples 10 - 13, Comparative examples 8 - 9

Evaluation was performed according to the same methods as in Examples 1 to 9 except for using a homopolypropylene (MFR = 10 g/10 min). The results are shown in Table 2.

### Example 14

Into the vessels of Examples 10 - 14, aqueous 0.5 % by weight solutions of Erythrosine and Acid Red which are colorants for food were charged and stored at 30 °C/5 days. Then, the contents were discharged, and after washing with water, the discoloration degree of the vessel was judged by observation with eyes, whereby no change of the vessel with the both aqueous solutions was recognized.

### Examples 15 - 20, Comparative examples 10 - 13

By use of a linear low-density polyethylene (MFR: 30, density: 0.919) and a high-pressure process low-density polyethylene (MFR: 20, density: 0.918), the discoloration degrees of the vessels with the foods were judged according to the same methods as in Examples 1 - 9 to obtain the results shown in Table 3 and Table 4.

In this case, MFR was measured according to JIS K6760 under the conditions of a temperature of 190 °C and a load of 2.16 kg, and the density similarly according to JIS K6760.

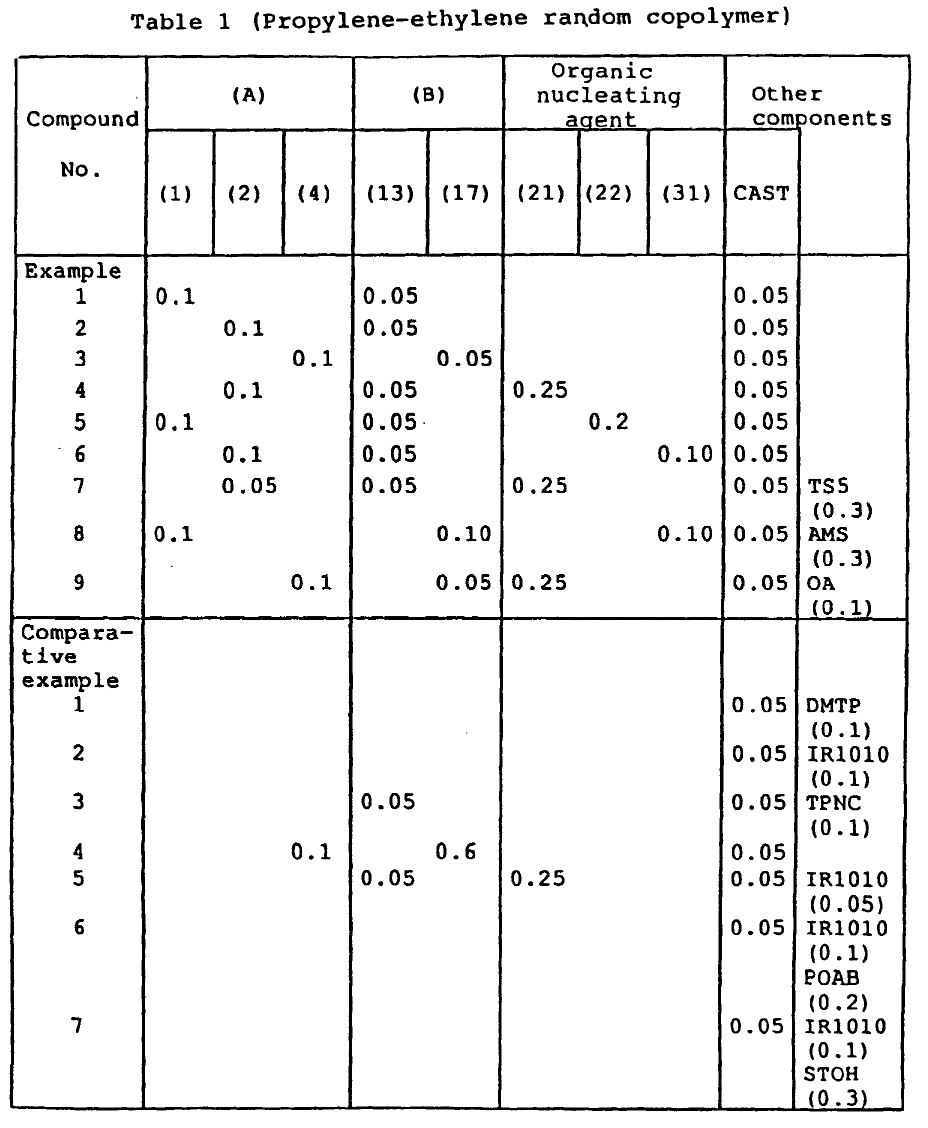

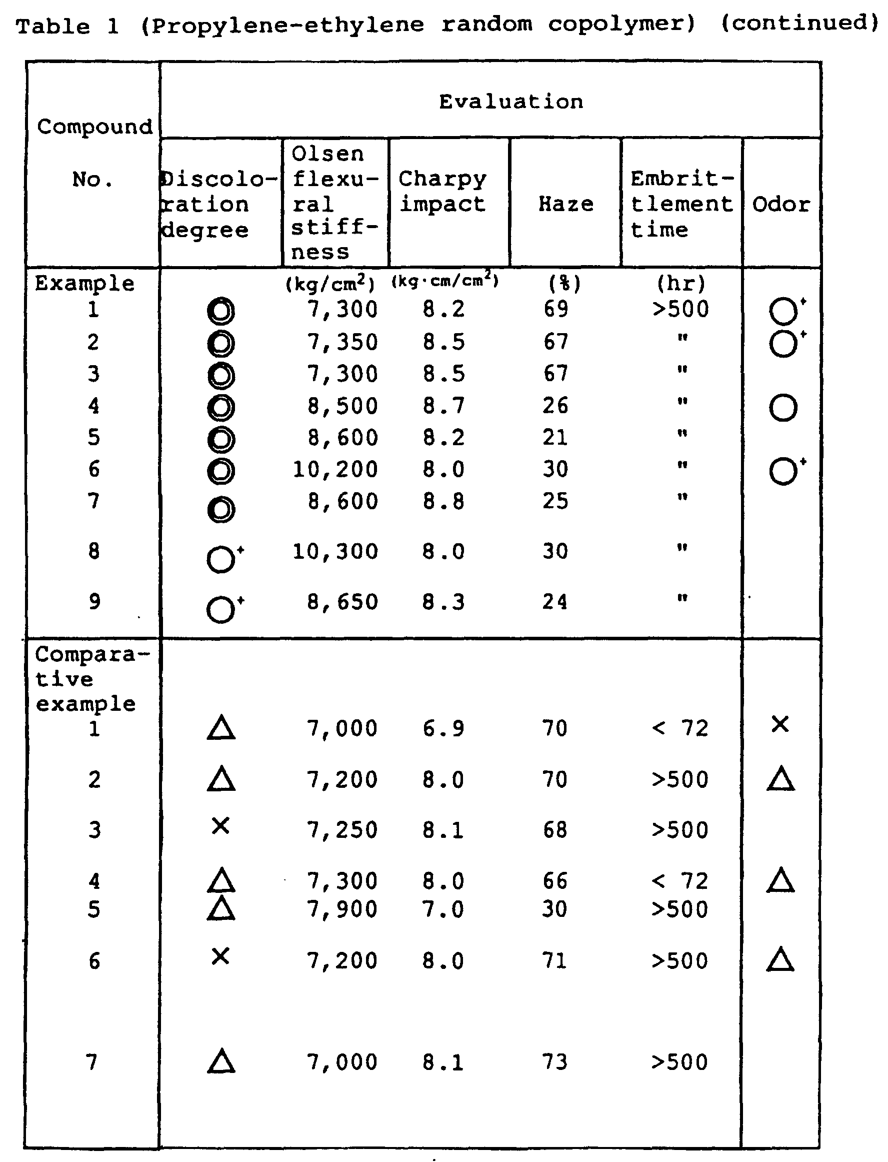

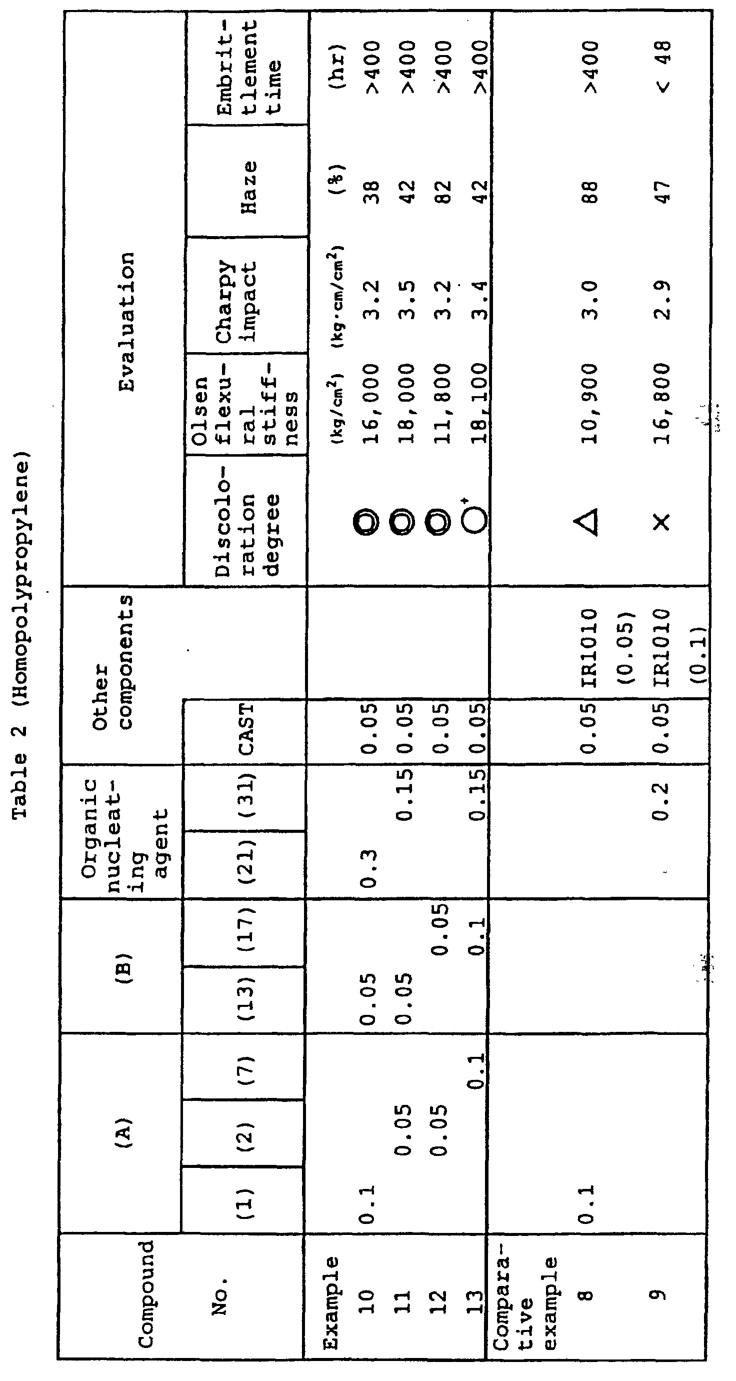

**Table 3**

| (Linear low-density polyethylene) | | | | | | | | |
|---|---|---|---|---|---|---|---|---|
| Compound No. | (A) | | | (B) | | Other compounds | | Discoloration degree |
| | (1) | (2) | (7) | (13) | (17) | CAST | | |
| Example | | | | | | | | |
| 15 | 0.1 | | | 0.05 | | 0.1 | | ⓞ |
| 16 | | 0.05 | | 0.05 | | 0.1 | | ⓞ |
| 17 | | | 0.05 | | 0.05 | 0.1 | OA (0.02) | ○ |

| Comparative example | | | | | | | | |
|---|---|---|---|---|---|---|---|---|
| 10 | | | | 0.05 | | 0.1 | IR1010(0.1) | Δ |
| 11 | | | | 0.05 | | 0.1 | TNPC(0.1) | × |

**Table 4**

| (High-pressure process low-density polyethylene) | | | | | | | | |
|---|---|---|---|---|---|---|---|---|
| Compound No. | (A) | | | (B) | | Other compounds | | Discoloration degree |
| | (1) | (2) | (7) | (13) | (17) | CAST | | |
| Example | | | | | | | | |
| 18 | 0.1 | | | 0.05 | | | | ⓞ |
| 19 | | 0.05 | | 0.05 | | | | ⓞ |
| 20 | | | 0.05 | | 0.05 | | | ⓞ |

| Comparative example | | | | | | | | |
|---|---|---|---|---|---|---|---|---|
| 12 | | | | 0.05 | | | IR1010(0.1) | Δ |
| 13 | | | | 0.05 | | | TNPC (0.1) | × |

As is apparent from the above test results, the sealed vessel for colored food made of a polyolefin having the composition as specified herein before undergoes no discoloration even when contacted with a colored food and also is excellent in odor characteristics, mechanical characteristics and stability, and therefore excellent when used as a sealed vessel for colored food, typically a sealed vessel for heating by microwave oven.

The fact that the use of a sealed vessel for storing colored food according to the present invention can inhibit coloration is entirely unexpected at the present stage when the coloration cause has not been clarified, and also it has been difficult to find out one having mechanical characteristics, no odor and also sufficient characteristic of durability (embrittlement time).

## Claims

1. Use of a sealed vessel composed of a polyolefin containing (A) 0.01 to 1 parts by weight of a hindered amine light stabilizer having a molecular weight of 500 or more and (B) 0.01 to 0.5 parts by weight of an aromatic phosphite and/or an aromatic phosphonite antioxidant, wherein the relative proportions by weight of additives (A) and (B) are based on 100 parts by weight of the polyolefin, and wheren the material from which the vessel is composed contains no phenol type antioxidant, for storing coloured food so as to prevent discoloration of the vessel during storage of the food.

2. Use of a sealed vessel for storing coloured food as claimed in Claim 1, wherein the polyolefin is an ethylene polymer or a propylene polymer;
the hindered amine light stabilizer is at least one compound selected from the group consisting of polycondensate of dimethyl succinate and 1-(2-hydroxyethyl)-4-hydroxy-2,2,6,6-tetramethylpiperidine, poly((6-(1,1,3,3-tetramethylbutyl)imino-1,3,5-triazine-2,4-diyl) ((2,2,6,6-tetramethyl-4-piperidyl)imino) hexamethylene ((2,2,6,6-tetramethyl-4-piperidyl)imino)), tetrakis(2,2,6,6-tetramethyl-4-piperidyl)1,2,3,4-butane tetracarboxylate and poly(2-N,N'-bis(2,2,6,6-tetramethyl-4-piperidyl)hexamethylenediamine-4-(N-morpholino)symtriazine); and
the aromatic phosphite and/or aromatic phosphonite antioxidant is at least one selected from the group consisting of tris(2,4-di-t-butylphenyl)phosphite, tetrakis(2,4-di-t-butylpheyl)-4,4'-biphenylenephosphonite, bis (2,6-di-t-butyl-4-methylphenyl)pentaerythritol-di-phosphite 2,2'-ethylydiene bis (4, 6-di-t-butylphenyl) fluorophosphite and methylene bis (4,6-di-t-butylphenyl)-2-ethylhexylphosphite.

3. Use of a sealed vessel for storing coloured food as claimed in Claim 1, wherein the polyolefin is at least one polymer selected from the group consisting of propylene homopolymers, propylene-ethylene random copolymers and propylene-ethylene block copolymers.

4. Use of a sealed vessel for storing coloured food as claimed in Claim 2, wherein the aromatic phosphite and/or aromatic phosphonite antioxidant is tris(2,4-di-t-butylphenyl)phosphite and/or tetrakis(2,4-di-t-butylphenyl)-4,4'-biphenylenephosphonite.

5. Use of a sealed vessel for storing coloured food as claimed in Claim 1, wherein the hindered amine light stabilizer is contained in an amount of 0.02 to 0.5 parts by weight per 100 parts by weight of the polyolefin.

6. Use of a sealed vessel for storing coloured food as claimed in Claim 1, wherein the aromatic phosphite and/or aromatic phosphonite antioxidant is contained in an amount of 0.02 to 0.3 parts by weight per 100 parts by weight of the polyolefin.

7. Use of a sealed vessel for storing coloured food as claimed in Claim 1, further containing as a formulation component 0.01 to 1 parts by weight of an organic nucleating agent per 100 parts by weight of the polyolefin.

8. Use of a sealed vessel for storing coloured food as claimed in Claim 7, wherein the organic nucleating agent is contained in an amount of 0.03 to 0.5 parts by weight per 100 parts by weight of the polyolefin

9. Use of a sealed vessel for storing coloured food as claimed in any of Claims 1 to 8, wherein the vessel is a vessel for heating cooking.

## Patentansprüche

1. Verwendung eines aus einem Polyolefin zusammengesetzten versiegelten Behälters, der (A) 0,01 bis 1 Gew.-Teile eines gehinderten Aminlichtstabilisators mit einem Molekulargewicht von 500 oder mehr und (B) 0,01 bis 0,5 Gew.-Teile eines aromatischen Phosphit- und/oder eines aromatischen Phosphonit-Anitoxidationsmittels enthält, worin die relativen Gewichtsverhältnisse der Additive (A) und (B) auf 100 Gew.-Teile des Polyolefins bezogen sind und worin das Matertial, aus dem der Behälter zusammengesetzt ist, kein Antioxidationsmittel vom Phenoltyp enthält, zum Lagern von gefärbten Nahrungsmitteln, um so der Verfärbung des Behälters während der Lagerung der Nahrungsmittel vorzubeugen.

2. Verwendung eines versiegelten Behälters zum Lagern von gefärbten Nahrungsmitteln nach Anspruch 1, worin das Polyolefin ein Ethylenpolymer oder Propylenpolymer,
der gehinderte Aminlichtstabilisator zumindest eine aus den Polykondensaten von Dimethylsuccinat und 1-(2-Hydroxyethyl)-4-hydroxy-2,2,6,6-tetramethylpiperidin, Poly-[(6-(1,1,3,3-tetramethylbutyl)imino-1,3,5-triazin-2,4-diyl)] [(2,2,6,6-tetramethyl-4-piperidyl)-imino)]hexamethylen [(2,2,6,6-tetramethyl-4-piperidyl)imino)], Tetrakis (2,2,6,6-tetramethyl-4-piperidyl) 1,2,3,4-butan-tetracarboxylat und Poly[(2-N,N'-bis (2,2,6,6-tetramethyl-4-piperidyl)-hexamethylendiamin-4-(N-morpholino)symtriazin] ausgewählte Verbindung und
das aromatische Phosphit und/oder aromatische Phosphonit-Antioxidationsmittel zumindest aus Tris(2,4-di-tTris(2,4-di-t-butylphenyl)phosphit, Tetrakis-(2,4-di-t-butylphenyl)-4,4'biphenylenphosphonit, bis (2,6-di-t-butyl-4-methylphenyl) pentaerythritol-di-phosphit, 2,2'-Ethyliden-bis-(4,6-di-t-butylphenyl)fluorphosphit und Methylen-bis-(4,6-di-tbutylphenyl)-2-ethylhexylphosphit ausgewählt sind.

3. Verwendung eines versiegelten Behälters zum Lagern von gefärbten Nahrungsmitteln nach Anspruch 1, worin das Polyolefin zumindest ein aus den Propylen-Homopolymeren, Propylen-Ethylen-Zufallscopolymeren und Propylen-Ethylen-Blockcopolymeren ausgewähltes Polymer ist.

4. Verwendung eines verseigelten Behälters zum Lagern von gefärbten Nahrungsmitteln nach Anspruch 2, worin das aromatische Phosphit- und/oder aromatische Phosphonit-Antioxidationsmittel Tris(2,4-di-t-butylphenyl)phosphonit und/oder Tetrakis-(2,4,-di-t-butylphenyl)-4,4'-biphenylenphosphonit ist.

5. Verwendung eines versiegelten Behälters zum Lagern von gefärbten Nahrungsmitteln nach Anspruch 1, worin der gehinderte Aminlichtstabilisator in einer Menge von 0,02 bis 0,5 Gew.-Teile pro 100 Gew.-Teile des Polyolefins enthalten ist.

6. Verwendung eines versiegelten Behälters zum Lagern von gefärbten Nahrungsmitteln nach Anspruch 1, worin das aromatische Phosphit- und/oder aromatische Phosphonit-Antioxidationsmittel in einer Menge von 0,02 bis 0,3 Gew.-Teile pro 100 Gew.-Teile des Polyolefins enthalten ist.

7. Verwendung eines versiegelten Behälters zum Lagern von gefärbten Nahrungsmitteln nach Anspruch 1, welcher weiter als eine Formulierungskomponente 0,01 bis 1 Gew.-Teile eines organischen kernbildenden Mittels pro 100 Gew.-Teile des Polyolefins enthält.

8. Verwendung eines versiegelten Behälters zum Lagem von gefärbten Nahrungsmitteln nach Anspruch 7, worin das organische kernbildende Mittel in einer Menge von 0,03 bis 0,5 Gew.-Teile pro 100 Gew.-Teile des Polyolefins enthalten ist.

9. Verwendung eines versiegelten Behälters zum Lagern von gefärbten Nahrungsmitteln nach einem der Ansprüche 1 bis 8, worin der Behälter ein Behälter zum Erwärmen von Essen ist.

## Revendications

1. Utilisation d'un récipient scellé composé d'une polyoléfine contenant (A) 0,01 à 1 partie en poids d'un photostabilisateur à amine bloquée ayant un poids moléculaire de 500 ou plus et (B) 0,01 à 0,5 partie en poids d'un antioxydant à phosphite aromatique et/ou à phosphonite aromatique, **caractérisée en ce que** les proportions relatives en poids des additifs (A) et (B) sont basées sur 100 parties en poids de la polyoléfine, et **en ce que** le matériau dont est composé le récipient ne contient pas d'antioxydant de type phénol, pour le stockage d'aliments colorés de façon à éviter la décoloration du récipient pendant le stockage des l'aliments.

2. Utilisation d'un récipient scellé pour le stockage d'aliments colorés selon la revendication 1, **caractérisée en ce que** la polyoléfine est un polymère d'éthylène ou un polymère de propylène;
le photostabilisateur à amine bloquée est au moins un composé choisi parmi le groupe constitué d'un polycondensat de succinate de diméthyle et de 1-(2-hydroxyéthyl)-4-hydroxy-2,2,6,6-tétraméthylpipéridine, du poly((6-(1,1,3,3-tétraméthylbutyl)imino-1,3,5-triazine-2,4-diyl)((2,2,6,6-tétraméthyl-4-pipéridyl)imino)hexaméthylène((2,2,6,6-tétraméthyl-4-pipéridyl)imino)), du tétrakis(2,2,6,6-tétraméthyl-4-pipéridyl)1,2,3,4-butanetétracarboxylate et du poly(2-N,N'- bis-(2,2,6,6-tétraméthyl-4-pipéridyl)hexaméthylène-diamine-4-(N-morpholino)symtriazine); et
l'antioxydant à phosphite aromatique et/ou à phosphonite aromatique est au moins l'un choisi parmi le groupe constitué du tris(2,4-di-t-butylphényl)phosphite, du tétrakis(2,4-di-t-butylphényl)-4,4'-biphénylènephosphonite, du bis(2,6-di-t-butyl-4-méthylphényl)pentaérythritol-di-phosphite, du 2,2'-éthylidènebis(4,6-di-t-butylphényl)fluorophosphite et du méthylènebis(4,6-di-t-butylphényl)-2-éthylhexylphosphite.

3. Utilisation d'un récipient scellé pour le stockage d'aliments colorés selon la revendication 1, **caractérisée en ce que** la polyoléfine est au moins un polymère choisi parmi le groupe constitué des homopolymères de propylène, des copolymères statistiques de propylène-éthylène et des copolymères blocs de propylène-éthylène.

4. Utilisation d'un récipient scellé pour le stockage d'aliments colorés selon la revendication 2, **caractérisée en ce que** l'antioxydant à phosphite aromatique et/ou à phosphonite aromatique est le tris (2,4-di-t-butylphényl)phosphite, et/ou le tétrakis(2,4-di-t-butylphényl)-4,4'-biphénylènephosphonite.

5. Utilisation d'un récipient scellé pour le stockage d'aliments colorés selon la revendication 1, **caractérisée en ce que** le photostabilisateur à aminé bloquée est contenu dans une quantité de 0,02 à 0,5 partie en poids pour 100 parties en poids de la polyoléfine.

6. Utilisation d'un récipient scellé pour le stockage d'aliments colorés selon la revendication 1, **caractérisée en ce que** l'antioxydant à phosphite aromatique et/ou à phosphonite aromatique est contenu dans une quantité de 0,02 à 0,3 partie en poids pour 100 parties en poids de la polyoléfine.

7. Utilisation d'un récipient scellé pour le stockage d'aliments colorés selon la revendication 1, contenant en outre, en tant que composant de formulation, 0,01 à 1 partie en poids d'un agent de nucléation organique pour 100 parties en poids de la polyoléfine.

8. Utilisation d'un récipient scellé pour le stockage d'aliments colorés selon la revendication 7, **caractérisée en ce que** l'agent de nucléation organique est contenu dans une quantité de 0,03 à 0,5 partie en poids pour 100 parties en poids de la polyoléfine.

9. Utilisation d'un récipient scellé pour le stockage d'aliments colorés selon l'une quelconque des revendications 1 à 8, **caractérisée en ce que** le récipient est un récipient pour chauffage/cuisson.
